(19) Europäisches Patentamt / European Patent Office / Office européen des brevets

(11) **EP 4 312 016 A1**

(12) **EUROPEAN PATENT APPLICATION**

(43) Date of publication:
**31.01.2024 Bulletin 2024/05**

(21) Application number: **22186808.6**

(22) Date of filing: **25.07.2022**

(51) International Patent Classification (IPC):
**G01N 15/02** (2024.01)

(52) Cooperative Patent Classification (CPC):
**G01N 15/0211;** G01N 2015/0046; G01N 2015/0053

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Malvern Panalytical Limited Malvern, Worcestershire WR14 1XZ (GB)**

(72) Inventors:
• **MARWICK, Daniel**
  **Malvern, WR14 1XZ (GB)**
• **LASTAKCHI, Sarah**
  **Malvern, WR14 1XZ (GB)**
• **BARKER, David**
  **Malvern, WR14 1XZ (GB)**

(74) Representative: **Barker Brettell LLP**
  **100 Hagley Road**
  **Edgbaston**
  **Birmingham B16 8QQ (GB)**

(54) **DATA QUALITY**

(57) A method of automatically identifying data quality issues in background data for laser diffraction-particle characterisation is provided. The method comprises receiving background data corresponding to light intensity measured by each of a plurality of detectors in a laser-diffraction-based particle size analysis system. A processor is used to automatically determine if the background data contains at least one artefact that is indicative of a source of error in the particle size analysis system. If the background data is found to contain at least one artefact an indication is provided that the background data contains at least one artefact. Furthermore, the at least one artefact is classified, and the classification is reported.

Figure 9

**Description**

**Field of the invention**

The present invention relates to laser diffraction-based particle size analysis.

**Background**

Laser diffraction is a well-established technique for characterising the size of particles within a sample. A light source (a laser) can be used to illuminate particles within a sample, and the resultant diffraction pattern captured at one or more detectors. The diffraction pattern is dependent on the size of the particles, thus allowing the size of the particles within the sample to be determined, as well as the distribution of the particle sizes.

Particle size analysis is an important technique for a wide variety of industry and processes. In food and pharmaceutical industries, for example, the technique can be used to analyse suspensions and emulsions by assessing the dispersion of particles within a liquid medium and whether there is excessive flocculation or coagulation. Many manufacturing processes, such as 3D printing, utilise fine powders. Particle size analysis can be used on 'dry' mediums, ensuring that the particle size is such that it enables efficient powder flow.

Devices configured to perform laser diffraction-based particle size analysis are available commercially. One such device is the Malvern Panalytical Mastersizer 3000.

However, obtaining accurate and reliable data with any such device can be challenging. When taking measurements, an accurate and stable background measurement is needed (i.e. data collected via the detectors when no particulate sample is present). A poor background measurement may result in inaccurate particle size measurements, or failure to produce particle size measurements at all due to an insufficient signal-to-noise ratio.

Presently, most data quality checking is performed following measurement of particle size. This requires users to analyse and interpret data quality issues, which may be time consuming and require additional training. Even for trained users, identifying background data issues in the measurement data may be difficult.

Furthermore, checking the quality of measurement data may require multiple measurements to be taken, particularly if the user has difficulty in identifying what is causing the data quality issue. This may be time consuming, cause wastage of samples and dispersant, and result in inefficient use of the resources, energy, and human effort.

An effective method for identifying various issues and artefacts in the background data for laser diffraction-based particle size analysis is desirable.

**Summary**

According to a first aspect, there is provided a method of automatically identifying data quality issues in background data for laser diffraction- particle characterisation, the method comprising:

> receiving background data corresponding to light intensity measured by each of a plurality of detectors in a laser-diffraction-based particle size analysis system;
> using a processor to automatically determine if the background data contains at least one artefact that is indicative of a source of error in the particle size analysis system;
> in the case that it is determined that the background data does contain at least one artefact, using the processor to provide an indication that the background data contains at least one artefact.

The method may comprise classifying the at least one artefact in the background data. The classification may identify one or more classes of artefact present in the background data (e.g. misalignment, sample cell contamination, dispersant contamination, thermal instability). The method may comprise reporting a classification of the artefact to a user. The reporting of the classification of the artefact may comprise recommending a corrective action to the user. The method may employ a plurality of different algorithms, each algorithm looking for a particular class of artefact. The classification of an artefact may be determined, at least in part, by what algorithm detected the artefact.

The method may further comprise:

> generating the background data by illuminating a sample cell comprising a control sample with a light beam from a light source so as to generate scattered light from the interaction of the light beam with the sample cell and/or control sample and detecting the scattered light with the plurality of detectors;
> wherein the control sample nominally consists entirely of a dispersant, and wherein the plurality of detectors are positioned at a plurality of different angles relative to a propagation direction of the light beam.

Automatically determining if the background data contains at least one artefact may comprise applying to the background data at least one of:

a dynamic algorithm configured to identify a transient fluctuation within the background data; and
a static algorithm configured to identify a static artefact in the background data.

The dynamic algorithm may comprise at least one of:

(i) a peak detection algorithm configured to identify peaks within the time series background data and calculate the percentage of the time series background data that contains peaks of intensity greater than a threshold value;
(ii) an adaptive diffraction algorithm configured to identify transient events with the background data and calculate a property of the transient events; and
(iii) a standard deviation algorithm wherein the maximum standard deviation in the time series background data for each detector is calculated; and
wherein the dynamic algorithm is configured to identify the time series background data as containing a dynamic fluctuation if at least one of:

a) the calculated percentage is above a threshold value,
b) the calculated property of the transient events is above a threshold value; and
c) the calculated maximum standard deviation for the time series background data is above a threshold value.

The static algorithm may comprise at least one of:

(i) a hump algorithm configured to identify a hump within the static background data; and
(ii) a spikey algorithm configured to identify excessive variance between the static background data measured between at least one pair of detectors; and
wherein the static algorithm is configured to identify the static background data as containing a static artefact if either a hump or an excessive variance between detectors is identified.

The static algorithm may comprise:

(i) a numerical algorithm configured to compare the static background data measured with at least two of the detectors and identify if a first of the two or more detectors is greater than a second of the two or more detectors by a threshold value;
(ii) a curve fitting algorithm configured to fit an exponential decay function and a Gaussian function to the static background data.

The hump algorithm may comprise a machine learning algorithm, comprising a machine learning model that has been trained to identify a hump in the static background data.
The machine learning model may comprise a convolutional neural network. The convolutional neural network may be a deep convolutional neural network with at least three, four or five convolutional layers.
Automatically determining if the background data contains at least one artefact may be performed prior to a particle analysis measurement of a particle sample, and the particle analysis measurement is halted if it is determined that background data contains at least one artefact.
The particle analysis measurement may comprise illuminating the sample with a light beam from a light source, thereby generating scattered light from the interaction of the light beam with particles of the sample; detecting raw measurement data comprising a distribution of the scattered light intensity over a range of different scattering angles; using a processor to determine a particle characteristic from the raw measurement data.
The method may further comprise:

generating corrected measurement data by subtracting the background data from the raw measurement data; and performing a negative data check, wherein the corrected measurement data is identified as faulty if the number of detectors with negative corrected measurement values or the maximum negative value across all of the corrected measurement data is above a threshold value.

Automatically determining if the background data comprises at least one artefact may be performed at least once as background data is received. For example, the background data may be checked for artefacts once per second as the background data is received.

A live display may be presented to a user that is updated as the background data is checked to flag any issues with the background data (before any sample is consumed by a measurement).

The method may further comprise automatically determining a corrective action in response to a determination of a type of artefact, and displaying to the user an indication of the corrective action.

According to a second aspect, there is provided a non-volatile machine readable medium comprising instructions for configuring a processor to perform a method, the method comprising:

receiving background data corresponding to light intensity measured by each of a plurality of detectors in a laser-diffraction-based particle size analysis system;

using a processor to automatically determine if the background data contains at least one artefact that is indicative of a source of error in the particle size analysis system;

in the case that it is determined that the background data does contain at least one artefact, using the processor to provide an indication that the background data contains at least one artefact.

The method may be in accordance with the first aspect, including any optional features thereof.

According to a third aspect, there is provided a laser diffraction instrument, comprising:

a sample cell;

a light source configured to illuminate the sample cell with a light beam, thereby generating scattered light from the interaction of the light beam with particles within the sample cell;

a plurality of light detectors configured to detect a distribution of the scattered light intensity over a range of different scattering angles;

a processor configured to determine a particle characteristic from the distribution of scattered light intensity over the range of different scattering angles;

wherein the processor is further configured to:

receive background data corresponding to light intensity measured by each of the plurality of detectors;

automatically determine if the background data contains at least one artefact that is indicative of a source of error in the particle size analysis system;

in the case that it is determined that the background data does contain at least one artefact, provide an indication that the background data contains at least one artefact.

The processor may be configured to perform the method of the first aspect, including any optional features thereof.

## Detailed description

Embodiments of the invention will be described, purely by way of example, with reference to the accompanying drawings, in which:

Figure 1 shows a schematic diagram of a laser diffraction-based particle analyser;

Figure 2 shows an example of particle size distribution data and a background measurement;

Figure 3 shows an example of background data without any artefacts;

Figure 4 shows an example of background data with an artefact;

Figure 5 shows an example of background data with an artefact;

Figure 6 shows an example of background data with an artefact;

Figure 7 shows an example of background data with an artefact;

Figure 8 shows a block diagram of a laser diffraction-based particle analysis system containing an analyser like that shown in Figure 1;

Figure 9 shows a flow chart illustrating a method for determining if the background data contains any artefacts in accordance with the present invention;

Figure 10 shows an example of results generated in accordance with the present invention;

Figure 11 shows an example of results generated in accordance with the present invention;

Figure 12 shows an example of results generated in accordance with the present invention;

Figure 13 shows an example of results generated in accordance with the present invention;

Figure 14 shows an example of results generated in accordance with the present invention;

Figure 15 shows an example of results generated in accordance with the present invention;

Figure 16 shows an example of background data with an artefact;

Figure 17 shows an example of results generated in accordance with the present invention;

Figure 18 shows an example of results generated in accordance with the present invention.

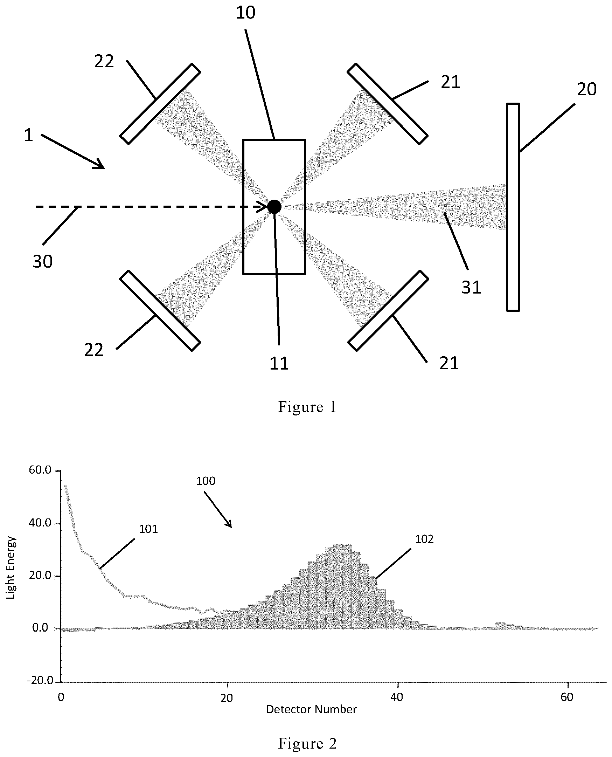

Referring to Figure 1, a schematic diagram of a particle size analyser 1 is shown. The particle analyser 1 uses laser diffraction to measure the particle size and particle size distribution (PSD) within a sample material. It is not necessary to consider the detailed operation of laser diffraction-based particle size analysis in order to understand the present invention, but the general principles are described below.

A sample cell 10 containing a sample material is disposed within the analyser 1. The sample cell 10 may comprise a flow cell, a cuvette or a surface on which a droplet sample is received. The sample comprises particles 11 suspended in a dispersant.

Analysis may be performed using a wet dispersion (i.e. a liquid dispersant, for example water, isopropyl alcohol, or oil), or a dry dispersion (e.g. air or dry nitrogen dispersant).

An incident light beam 30 from a light source 4 is directed onto the sample cell 10, and the diffracted/scattered light 31 from the particles 11 is measured using a plurality of detectors positioned at different angles around the measurement cell 10 (relative to the propagation direction of the incident laser beam 30). The plurality of detectors may comprise: a focal plane detector 20 that detects light diffracted by the particles 11 at small angles; side scatter detectors 21 that detect light diffracted/scattered at large angles by the particles 11; and backscatter detectors 22 that detect light scattered by the particles 11 backwards in a direction generally opposite the propagation direction of the incident laser beam 30.

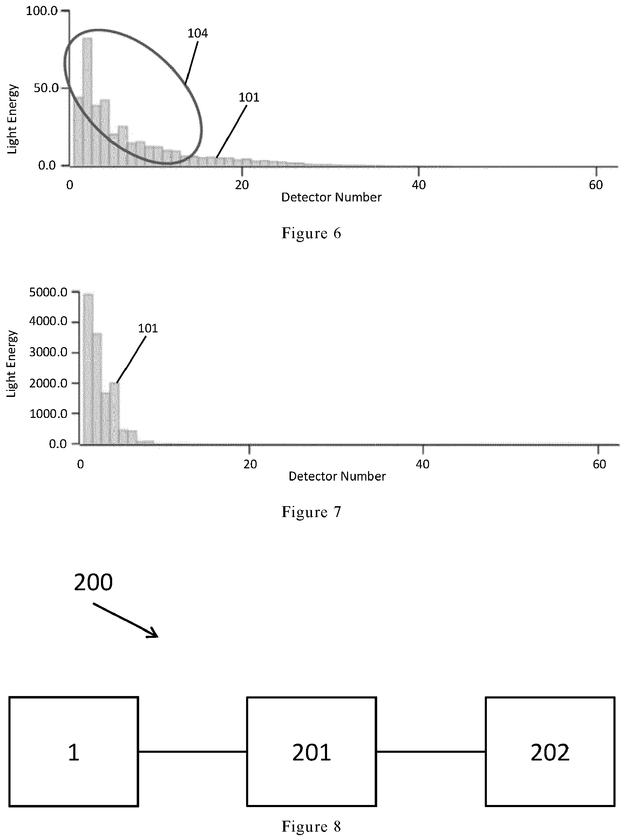

The intensity of scattered light detected at each of the plurality of detectors is provided to a processor (as explained with reference to Figure 8). The processor is configured to analyse the distribution of scattered light intensity to measure a sample characteristic, such as particle size and/or particle size distribution. Very generally, small particles will diffract light at greater angles (more isotropically) than larger particles. Hence, by analysing the scattered light intensity received at each of the plurality of detectors situated at different angles around the measurement cell 10, the particle size and particle size distribution can be determined.

The particle analyser 1 shown in Figure 1 is a simplified version of a real system. The system may include two light sources, such as a red (e.g. 633 nm) laser and a blue (e.g. 470 nm) LED. Using two light sources may be advantageous as it may allow a greater range of particle sizes to be analysed. The shorter wavelength of the blue light source enables a higher scattering intensity from small particles (for example sub-micron sized particles), which may allow smaller particles to be detected and analysed compared to using a single wavelength light source. The system may comprise mirrors and beam splitters so that both lasers can be directed down the same incident path as the beam 30 shown in Figure 1.

Each of the detector 20, 21, 22 may comprise a plurality of detector elements or be otherwise divided into subregions. For example, the focal plane detector 20 shown in Figure 1 may comprise multiple detectors each positioned at a different angle relative to the illuminating light beam propagation direction. The angular displacement between each of the detectors elements may be sufficiently small to enable accurate characterisation of particle size.

Referring to Figure 2, example data 100 is shown for a typical particle size analysis experiment using a system like that shown in Figure 1. The data 100 shows the light energy or intensity (in nominal units) plotted against detector number. Higher detector numbers are associated with higher scattering angles. As discussed above, each of the detectors is positioned at a different angle relative to the beam propagation direction. For example, detector number 1 could be at angle offset 1° from the beam propagation direction, detector number 2 be at 2°, etc. Knowing how each of the detectors is distributed (which is a predetermined characteristic of the system) means that the graph shown in Figure 2 is analogous to energy level plotted against diffraction angle (except that the x-axis is not necessarily linear, because the increment of scattering angle between successive detector numbers is not necessarily fixed).

The data 100 of Figure 2 shows a background data plot 101. This shows the background measurement of the system when no particles are present. The corrected data 102 may be calculated by taking the raw data (not shown) when a sample is measured and subtracting the background data 101.

The corrected data 102 shows a relatively smooth "humped" distribution of light energy around detector number 30, indicating a distribution of particle sizes (the size of which can be determined from the corresponding detector angle and the wavelength of the illuminating light beam). A small secondary peak is visible at approximately detector number 53. This is due to the system switching to the blue light source, and thus getting an increase of the diffracted light energy from small particles, which have a larger diffraction angle.

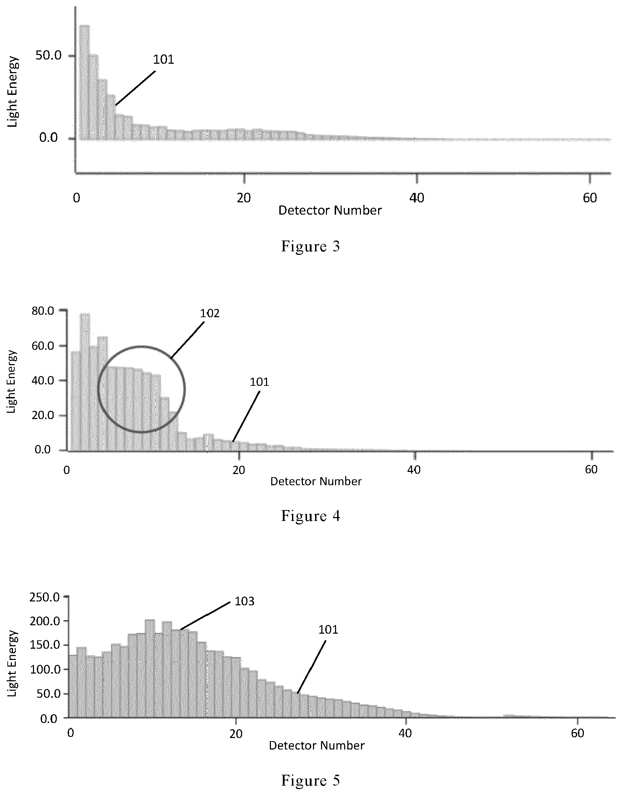

Referring to Figure 3, an example of 'good' background data 101 is shown. The background data 101 is this time shown as a bar graph. As the corrected data from which particle size characteristics are inferred is heavily dependent on the background data 101, it is important that the background data 101 does not include any artefacts or contamination. Background data may be taken with a sample rate of 5kHz or 10kHz, depending on whether a wet or dry sample is used.

The background data 101 may be considered 'good' data if it satisfies the following criteria: energy level of less than 100 on detector number 1; energy level of less than 20 on detector number 20; a trend of decreasing gradient magnitude as detector number increases; and limited fluctuations in energy level across the detectors.

Background data that satisfies these criteria is indicative: that the windows of the measurement cell and the dispersant are clean and free of contaminants; that the system has good optical alignment; and that the dispersant is stable (for example, the dispersant does not contain lots of bubbles). Various types of artefacts that may appear in the background data 101, what these artefacts may correspond to, and how these artefacts can be automatically identified, are discussed below. Artefacts may be classified as arising from: contamination of the measurement cell, optical misalignment, thermal instabilities (leading to inhomogeneities in refractive index of the dispersant), and contamination of the dispersant (by particles or bubbles).

Ensuring that the background data 101 is free of artefacts before taking any measurements may help improve the signal to noise ratio of the sample data, the accuracy of particle size characterisation, and the stability and repeatability of any measurements. It may also save time and reduce sample wastage, since measurements can be halted (e.g. automatically) in the event that the background comprises artefacts (e.g. before sample is added to the dispersant).

Referring to Figure 4, an example of background data 101 is shown where there are dynamic artefacts within the cell.. This can be seen in the background data as a 'hump' or intermittent peaks within the region 102, rather than a progressive decrease as seen in Figure 3. This is due to light scattering from a contamination within the dispersant (for example, previous sample residue left in the dispersant) or from bubbles within the dispersant (which may be removed by degassing, for example). As dispersant contaminants and bubbles will move within the cell, the artefacts that they cause within the background data 101 will appear to fluctuate over time. These dynamic fluctuations may be detected by looking for outlying peaks within a time series of background measurements taken over a given time interval. The hump arising from transient contamination, averaged over the full background measurement, is likely to be smaller than in Figure 5 below since the data is averaged will contain some mixed fraction of contamination and no-contamination measurements within the time series.

There are several possible actions that can be undertaken to correct for these artefacts, including degassing the dispersant to remove air bubbles or performing a clean cycle with fresh dispersant to remove contaminants.

Referring to Figure 5, an example of background data 101 is shown where the windows of the measurement cell have some sort of contamination. The measurement shown Figure 5 may comprise an average light intensity obtained over a relatively long measurement period. Contamination of the cell window could be caused by a fingerprint, dust, ink or an oily residue, for example. Such contamination could occur on the outside window of the cell, for example by someone touching the cell. Alternatively, contamination could occur on the inside window of the cell due to residue from previous experiments sticking to the inside window, for example. This can be seen in the background data 101 as a 'hump' at 103 rather than a progressive decrease as seen in Figure 3. This is due to light scattering from the contamination being measured on the detectors. This hump will only be deemed to have come from the dirt on the cell windows if there are no dynamic fluctuations within the background, as dirt on the cell window will not appear to move over time. The corrective action for this is to tell the user to clean the cell windows. The detection of a hump that is relatively static may be used to classify an artefact as arising from contamination of the sample cell.

Referring to Figure 6, an example of background data 101 is shown where the focal plane detector is misaligned with the incident laser beam. This can be seen in the background data 101 as spikes on some of the detector energy levels in the region 104 (i.e. the measurements recorded at the low number, low angle detectors of the focal plane detector). This is caused by detectors on one side of the incident beam receiving more light than the detectors on the opposing side. This may be caused by contamination on the cell windows. If this artefact is detected, the user should clean the cell windows before remeasuring the background signal, and/or checking the alignment and set up of the analyser itself.

In this instance, the background data 101 shows spikes (i.e. high values of light energy) on every other detector in the region 104. This is due to the detector layout of the particle size analysis system used to collect this data. The system can be generally understood to have detector numbers that alternate from each side of the incident beam direction with each increase in angle. For example, relative to the beam propagation direction, where 0° would be a detector directly in front of the beam, the system may have detector number 1 at +1°, detector number 2 at -2°, detector number 3 at +3°, etc. This may be done due to spatial constraints of the system, wherein it is not possible to have a detector at both the positive and negative angle for each increment. Such an arrangement may be more efficient than having detectors for corresponding positive and negative angles. The scattering is ideally symmetric around the direction of propagation of the light beam, and so it is expected that the measurement at corresponding positive and negative angles will be the same. As such, this arrangement allows twice as many angles to measured using the same number of detectors, or half the number of detectors to be used to measure the same number of angles. This detector layout is relatively common in laser diffraction instruments.

If there is a misalignment that causes more light to scatter to one side than the other, this will cause a spike on every other detector in this arrangement, as seen in Figure 6. This type of artefact is characteristic of optical misalignment, so can be classified as arising from optical misalignment.

Referring to Figure 7, an example of background data 101 is shown where there are excessive thermal gradients within the instrument or dispersant (US2018/038782 gives example methods for identification of scattering resulting from thermal gradients in dispersant, which is hereby incorporated by reference). This can be seen in the background data 101 as high background energy levels or large fluctuations that are asymmetric about the illumination axis, or fluctuations with specific temporal characteristics. Thermal gradients may be caused by the system being warmer than the dispersant. A thermal gradient may cause the refractive index of the dispersant to vary over the volume of the cell.

The background signals should decrease as the temperature of the dispersant stabilises and the refractive index gradients to reduce. The time taken for the dispersant temperature to stabilise may be longer for more volatile dispersants. If this artefact is encountered, the user should allow time for the background measurements to stabilise.

Artefacts arising from thermal instability may be classified as such, based on their detection by an algorithm that is looking for thermal instability.

Referring to Figure 8, an example particle characterisation system 200 is shown. The system 200 comprises a particle analyser 1, for example like that shown in Figure 1. The system further comprises a computer or controller 201. The controller 201 is configured to receive data from each of the detectors of the analyser 1. The controller 201 may comprise a processor configured to perform methods for analysing the data collected from the detectors. These methods may include methods for checking the quality of background data measurements. These methods may also include calculating particle size and particle size distribution once it has been determined that the analyser 1 is correctly configured and the data recorded is 'good'. The controller 201 may include a storage means for electronically storing data received from the detectors or any results calculated.

The system 200 further comprises a user interface 202. The user interface may comprise a visual display and user input device (such as a keyboard and./or mouse). The visual display may display to the user information output from the controller 201. This may include results calculated by the controller 201 (including real time results), and/or instructions and warnings advising the user of steps to be taken in order to perform the particle size analysis correctly. The user input device may allow the user to interact with a graphical user interface (GUI) displayed on the visual display.

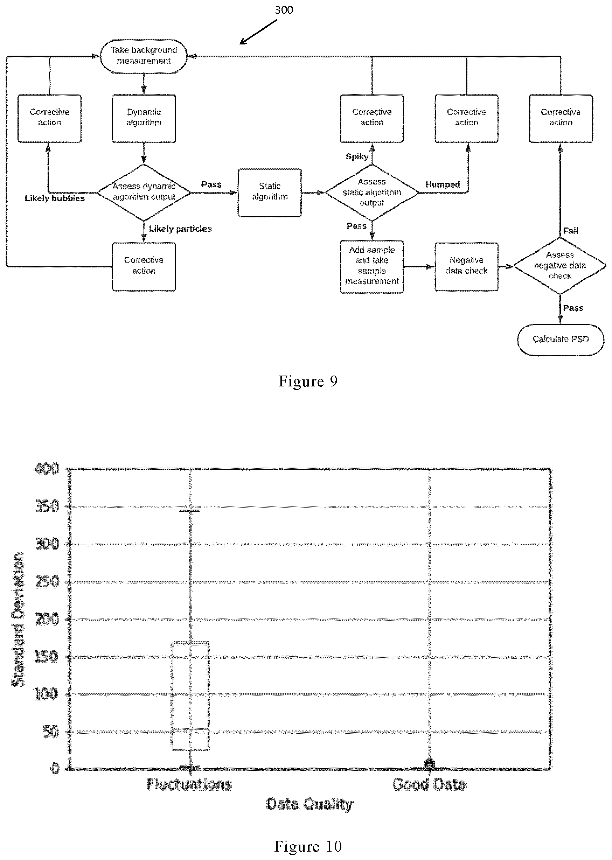

Referring to Figure 9, an example method 300 is shown for automated background data quality assessment. The background assessment method 300 may be used to identify and correct for the various artefacts discussed previously.

A user may set up the particle size analysis system and take a background measurement. The background measurement may be taken across a given time period in order to observe and assess dynamic fluctuations in the background data. The method 300 may be applied to pre-recorded background data (e.g. the user takes the background measurement and then applies the method 300), or the method 300 may be applied to the background data continuously and in near real time as it is recorded.

A dynamic algorithm may first be applied to the background data. The dynamic algorithm may be used to determine whether there is any transient instability within a time series data for the background. The dynamic algorithm may detect time dependent contamination caused by particles or by bubbles, as well as poor background caused by artifacts (for example, use of low stir speed with high viscosity or volatile dispersants).

The dynamic algorithm may also be able to differentiate the different causes of instability using the time series background data. The dynamic algorithm may be able to identify that the background data is being negatively influenced by bubbles, and subsequently instruct or prompt the user to take corrective action (e.g. degassing). Short transient durations may indicate bubbles, and/or long duration transient durations may be a contraindication of bubbles.

The dynamic algorithm may also be able to identify particle contamination within the dispersant, and subsequently instruct or prompt the user to take corrective action (e.g. performing a clean cycle with fresh dispersant to remove contaminants).

The dynamic algorithm may be a peak detection algorithm. The peak detection algorithm may be configured to identify contamination within the time series background data by detecting the percentage of the time series that contains anomalous peaks. The first step is to smooth the time series for each detector by using a normalised Gaussian kernel

$$G(t) = \frac{e^{\left(-\frac{t^2}{2\sigma^2}\right)}}{\sum_T G(t)} \qquad (1)$$

wherein $\sigma$ is the standard deviation. This acts as a form of low pass filter, removing any of the higher frequency components of the signal.

The sum on the denominator is of a local range along the time series in the range from -($2l\sigma$ + 0.5) to ($2l\sigma$ + 0.5). Initial analysis on this algorithm found that $l$ = 4 and $\sigma$ = 50 were suitable values to use. Units of time in the over equation are the number of "snaps" or individual points on the time series data. $l$ = 4 would represent a time window of 0.4ms in a measurement with a sample rate of 10 kHz (which may be a wet measurement). A time window between 0.1ms and 1ms may be used.

The smoothed signal may then be convolved with a 1-dimensional Sobel filter

$$Sob(t = 0,1,2) = [-1,0,1] \qquad (2)$$

which acts as a peak/edge detection algorithm that exaggerates any peaks that remain within the time series background data after the high frequency components have been filtered out. The Sobel filter may be regarded as a gain or edge detection stage.

Any suitable low pass filter and gain or edge detection algorithm may be used, rather than the Gaussian and Sobel functions above.

After this convolution, any data less than a specified threshold value may be set to zero. The percentage of remaining non-zero data may then then be calculated. If the calculated percentage is larger than a specified value, the background data is identified as containing a dynamic fluctuation artefact. The peak threshold value may be chosen to be 0.5 (or a number between 0.4 and 0.7) and the peak percentage value may be set to be 0.5% (or a percentage between 0.25% and 1.5%). These values may be altered in order to produce best results, and the user may be able to specify what these values are.

Alternatively, the dynamic algorithm may be an adaptive diffraction algorithm. The adaptive diffraction algorithm may also be referred to as a transient event algorithm. The adaptive diffraction algorithm may be configured to detect dynamic sources of noise. This adaptive algorithm toolbox is a set of algorithms that look at time series data scattering data (i.e. vectors of scattering intensity at each of a plurality of detectors) and calculates the principal components for this data. The principle components may be determined with reference to a set of reference scattering data, calculated for a range of particle sizes and/or particle size distributions. Determining the principle components of scattering data may provide a compact representation of what is most characteristic of a scattering pattern. The algorithm may uses the principle time series of principle components determined from the time series of scattering data to determine the "ground state" - the set of closely grouped points with similar principal components that describe the majority of instances in a measurement - and "transient events" - other outlying points that represent particles or scattering events that are distinct from the ground state. A clustering algorithm may be used to identify a ground state, and to identify states that are not in the "ground state" cluster, for example.

These transient events may represent, for example, single large particles in a sample dominated by small particles. Alternatively, they represent any smaller population within the ensemble population of a sample. Only the first 2 principal components may be used, thereby making this a 2D problem.

In order to reduce the noise on the data and to make the data quicker to process, the data may be averaged. Data may be split into blocks of 100 snaps (or at least 50 snaps, or at least 20 snaps), and then averaged. This effectively reduces the data sample rate on measurements (including 'wet' measurements) from 10kHz to 100Hz.

Rather than basing the check on the percentage of background measurement taken up by peaks (like the peak detection algorithm above), the adaptive diffraction algorithm classifies the background data by using the percentage of data that contains transient events. Other statistics may also be calculated with regards to these transient events, such as the mean and standard deviation of the Euclidean distance of all data points in principal component space. The Euclidean distance is a form of vector distance or 2D distance. The Euclidean distance may be the simplest form of vector distance between transient events and the centre of the ground state in terms of the principal components, however other measures of vector distance may be used.

The Euclidean distance *d* is defined by the equation below, where *x* and *y* represent distances in principal component space and *n* is the number of principal components considered in the analysis.

$$d = \sqrt{\sum_{i=1}^{n}(x_i{}^2 + y_i{}^2)} \qquad (4)$$

The algorithm may use a Gaussian classifier, which effectively fits a 2D Gaussian probability distribution onto the spread of data points in principal component space. The threshold to this classifier may be 0.01, for example, meaning that the outer 1% of data points in the Gaussian distribution are classified as transient events.

Alternatively, variation in background data may be analysed using standard deviation. The maximum standard deviation in the time series of each detector may also be calculated for each measurement. This may allow for an empirically derived limit on the standard deviation to be derived that would allow unstable fluctuating data to be distinguished from stable data.

Any of the above algorithms may be used as the dynamic algorithm to analyse the time series background data and identify if there is a dynamic fluctuation within the background data. If it is determined such a dynamic fluctuation is present, the controller may instruct or prompt the user to take corrective action accordingly.

A static algorithm, or static contamination algorithm, may be applied to the background data. The static algorithm may be applied following the dynamic algorithm. The static algorithm may check for the presence of artefacts observed in a static background measurement. The static background measurement may be an average of background measurement taken over a given time interval. While the dynamic contamination check algorithm can be used to detect contamination within the cell, the static contamination algorithm may determine if there are artefacts that do not arise from the dispersant within the cell which do not cause dynamic background effects. This may include contamination on the cell windows or misalignment of the detectors and light source.

The static algorithm may comprise an algorithm for identifying humped data. Humped data may indicate contamination on the cell window.

The humped data algorithm may be a numerical checking algorithm. The humped algorithm may check if the scattering signal on detector 15 is greater than the signal detector 1, or the scattering signal on detector 1 is greater than 200, or the scattering signal on detector 20 is greater than 30, for example. The data collected from other detectors may be analysed to determine if a hump is present in other regions of the data.

Alternatively, the humped algorithm may comprise a curve fitting algorithm. The curve fitting algorithm may comprise simultaneously fitting the background data against two functions. The two functions may be: an exponential decay function (which occurs in good, clean background data); and a Gaussian function (which approximates the hump caused by light scattering from dirt or other static contamination). The function used to fit the scattering distributions may be

$$I(d) = Ae^{-kd} + \frac{B}{\sqrt{2\pi}\sigma}e^{\frac{(d-x)^2}{2\sigma^2}} \qquad (5)$$

where *d* is the detector number, *k* is the exponential decay constant, $\sigma$ is the standard deviation for the Gaussian, x is the central location of the Gaussian, and *A* and *B* are scaling constants. The contribution of the two functions to the overall fit may be assessed. If the contribution or magnitude of the Gaussian function is above a predetermined threshold, the algorithm may determine that the background data has a hump artefact.

Alternatively, the humped algorithm may be a machine learning algorithm configured to identify humped data. With suitable training, a machine learning algorithm may be able to pick out and identify poor quality data. Simulated data may be used to generate lots of curves with and without humps in them for training the machine learning algorithms on this labelled dataset.

A range of machine learning algorithms were assessed to see which performed best. A simulated dataset was generated and used to train different types of machine learning models on the data and the performance of the trained models was compared. At least some of the machine learning algorithms tested comprised artificial neural networks (ANNs).

The ANNs tested were agnostic to the data type provided as inputs. The model may comprise a convolutional neural network. The model was trained using the simulated dataset and Tensorflow/Keras deep learning library in Python.

Simulated data (used for training the machine learning algorithm) may be modelled by combining a decaying curve (for example a 1 / x variation is used here) and a gaussian peak to model how a hump would appear. Background data with and without humps can be generated with an appropriate label for use in training.

The equations and table below describe how such a dataset can be generated. A sensible range for setting any random values is given in the Table 1 below. These variables may be adapted for use on a particular system (for example systems with differing detector numbers.

$$g(x) = A \exp\left(\frac{(x - b)^2}{2c^2}\right) \qquad (6)$$

$$f(x) = \frac{1}{x^r} \qquad (7)$$

*Psuedo random background with hump = g(x) + f(x)*
*Psuedo random background without hump = f(x)*

Additionally, a small amount of random noise, and/or an instrumental response function, may be added to the data in order to more accurately reflect the experimental setup to be used for obtaining light scattering data. This may make the training data and subsequent machine learning algorithm more accurate. The exact forms of these may be determined empirically from the experimental setup.

Alternatively, training data for the machine learning could comprise experimentally obtained data obtained using a light scattering experimental setup, and then reviewed for artefacts and labelled accordingly.

*Table 1:* Example of suitable variables used for generating the simulated background data.

| Variable | Value | Range | Spacing | Notes |
|---|---|---|---|---|
| A | Random | 5 - 200 | Logarithmic | Amplitude of hump |
| x | Sequential array of values from 1 to 50 | 1 - 50 | - | This is number of detectors in the system |
| b | Random | 0-50 | Linear | Where the hump is centred |
| c | Random | 1 - 10 | Linear | Width of the hump |
| r | Random | 0.2 - 3 | Logarithmic | Defines how shallow/steep the background curve is |

During testing of the algorithms, a sequential convolutional neural network was found to be the best performer. The layers of this convolutional neural network model are shown in Table 2 and may be replicated in any modern deep learning library.

*Table 2:* Layers of the convolutional neural network found to perform best at identifying humped data.

| Layer Number | Layer Type | Layer Shape | Number of Parameters |
|---|---|---|---|
| 1 | InputLayer | (None, 50, 1, 1) | 0 |
| 2 | Conv2D | (None, 50, 1, 16) | 144 |
| 3 | BatchN ormalization | (None, 50, 1, 16) | 64 |
| 4 | ReLU | (None, 50, 1, 16) | 0 |
| 5 | Conv2D | (None, 25, 1, 16) | 2304 |
| 6 | BatchN ormalization | (None, 25, 1, 16) | 64 |
| 7 | ReLU | (None, 25, 1, 16) | 0 |
| 8 | Conv2D | (None, 25, 1, 32) | 4608 |
| 9 | BatchN ormalization | (None, 25, 1, 32) | 128 |
| 10 | ReLU | (None, 25, 1, 32) | 0 |

(continued)

| Layer Number | Layer Type | Layer Shape | Number of Parameters |
|---|---|---|---|
| 11 | Conv2D | (None, 13, 1, 32) | 9216 |
| 12 | BatchN ormalization | (None, 13, 1, 32) | 128 |
| 13 | ReLU | (None, 13, 1, 32) | 0 |
| 14 | Conv2D | (None, 13, 1, 64) | 18432 |
| 15 | BatchN ormalization | (None, 13, 1, 64) | 256 |
| 16 | ReLU | (None, 13, 1, 64) | 0 |
| 17 | Conv2D | (None, 7, 1, 64) | 36864 |
| 18 | BatchN ormalization | (None, 7, 1, 64) | 256 |
| 19 | ReLU | (None, 7, 1, 64) | 0 |
| 20 | Conv2D | (None, 7, 1, 128) | 73728 |
| 21 | BatchN ormalization | (None, 7, 1, 128) | 512 |
| 22 | ReLU | (None, 7, 1, 128) | 0 |
| 23 | Conv2D | (None, 4, 1, 128) | 147456 |
| 24 | BatchN ormalization | (None, 4, 1, 128) | 512 |
| 25 | ReLU | (None, 4, 1, 128) | 0 |
| 26 | Conv2D | (None, 4, 1, 128) | 147456 |
| 27 | BatchN ormalization | (None, 4, 1, 128) | 512 |
| 28 | ReLU | (None, 4, 1, 128) | 0 |
| 29 | Conv2D | (None, 4, 1, 128) | 147456 |
| 30 | BatchN ormalization | (None, 4, 1, 128) | 512 |
| 31 | ReLU | (None, 4, 1, 128) | 0 |
| 32 | Flatten | (None, 512) | 0 |
| 33 | Dense | (None, 1024) | 525312 |
| 34 | BatchN ormalization | (None, 1024) | 4096 |
| 35 | ReLU | (None, 1024) | 0 |
| 36 | Dense | (None, 1) | 1025 |
| 37 | Sigmoid Activation | (None, 1) | 0 |

The static algorithm may also comprise an algorithm for identifying spiky data. Spiky data may indicate misalignment of the analyser system optics. For example, the focal plane detector(s) may be offset from the centre of the light beam or appear to be offset due to contamination.

The spiky data algorithm may be a numerical checking algorithm. The spiky algorithm may check if the scattering signal on detector 1 is more than 2.5x the signal on detector 2, or the scattering signal on detector 2 is more than 1.3x greater than the signal on detector 1, or the scattering signal on detector 3 is more than 1.3x greater than the signal on detector 2, for example.

The spiky data algorithm may also be a machine learning algorithm, similar to that described for the humped data.

Any of the above algorithms may be used as the static algorithm (or part of the static algorithm) to analyse the static background measure and identify any static artefacts. If it is determined such a static artefact is present, the controller may instruct or prompt the user that one or more artefacts are present, what those artefacts are, and may further prompt the user to take corrective action accordingly.

If the dynamic and static algorithm both determine that the background data is 'good', the user may proceed with a measurement, and may be prompted to do so via the display. A particle sample shall be placed in the analyser

11

and raw measurement data collected.

As discussed above, corrected data may be obtained by subtracting the background data from the raw measurement data. Corrected data may be updated in near real-time and displayed to the user as 'live' data.

A negative data check may be performed on the corrected data. The live data should fluctuate around zero. If there are significant negative values across some or all of the detectors, this may indicate that the background had not stabilised before the background data was measured. The negative data check may comprise a numerical checking algorithm. The negative data check may check if any of the first 15 detectors has a scattering signal less than a predetermined negative value (for example -5), or if more than ten of the first 15 detectors have a scattering signal less than a predetermined negative value (for example -0.5).

If either of the criteria above are met, the negative data check will indicate that there is an error with the data and instruct or prompt to user to take corrective action accordingly (for example checking the sample and analyser and repeating the method 300). If the corrected data passes the negative data check, it may be parsed to another algorithm configured to calculate properties of the sample particle size, for example the modal, mean or median particle size or the particle size distribution (PSD).

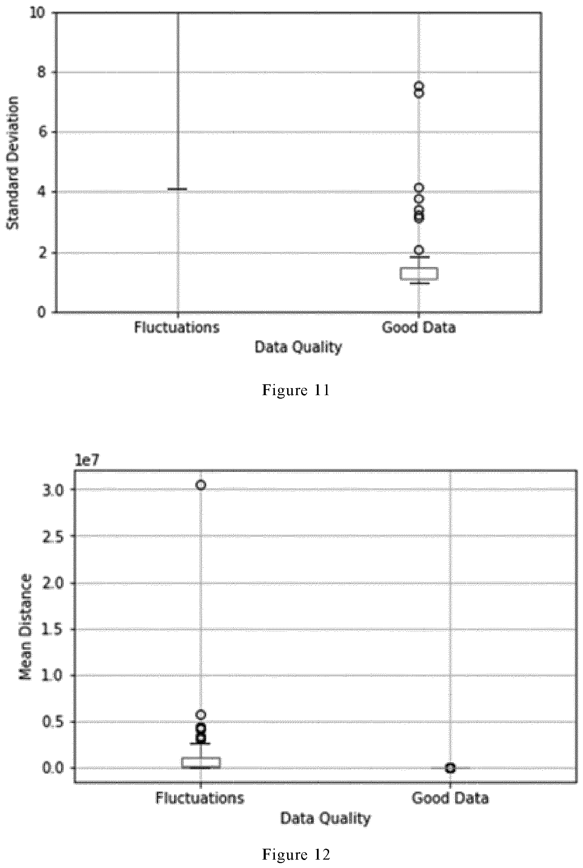

Referring to Figure 10, results are shown for the standard deviation based dynamic algorithm. For this, bulk background data which was known to contain fluctuations was used as was bulk background data which was marked as good. The results show the values of the maximum standard deviation over all detectors, illustrated with a box plot. Figure 11 shows a box plot for a subset of the data included in Figure 10, showing the scale of the 'good' data.

These box plots show that there is only a small overlap between the maximum standard deviation measured for the 'good' cases and the cases with fluctuation. As such, this algorithm may provide a simple and quick way to identify fluctuations. In this instance, a maximum standard deviation threshold value of 10 across all detectors should be sufficient to flag the majority of cases which contain fluctuations.

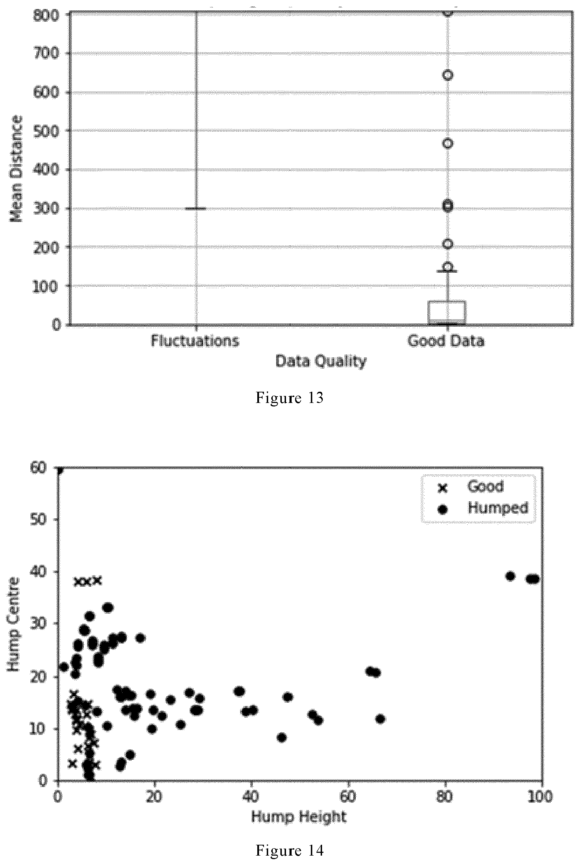

Referring to Figure 12, results are shown for the adaptive diffraction dynamic algorithm wherein the mean Euclidean distance of transient events is used as a comparative statistic. Data marked was marked as 'good' and containing fluctuations, and the results are shown as a box plot similar to Figure 10. Likewise, Figure 13 shows a box plot for a subset of the data included in Figure 12, showing the scale of the 'good' data.

Figures 12 and 13 show that mean Euclidean distance of transient events is also an acceptable criterion for identifying fluctuations, as there is little overlap in this measurement between the 'good' and fluctuation datasets.

Referring to Figure 14, results are shown for the curve fitting approach for detecting humps within static data. Although classifying good and humped data is difficult, this can be achieved if a combination of variables is considered. Figure 14 shows the centre of the hump plotted against the hump height as found by the curve fitting algorithm.

In this instance, humped data may be isolated by setting threshold values of heights greater than 10 and central locations greater than 20, save for three outlying data points. Humps may be detected even on good data due to the fact that the hypothetical good background does not have a pure exponential decay profile. A low hump at the inner detectors is often needed to modify the Gaussian profile for a good fit. It is expected that contamination would cause a larger hump, or a hump in the outer detectors, that would be differentiable from the minor Gaussian fits observed in good data.

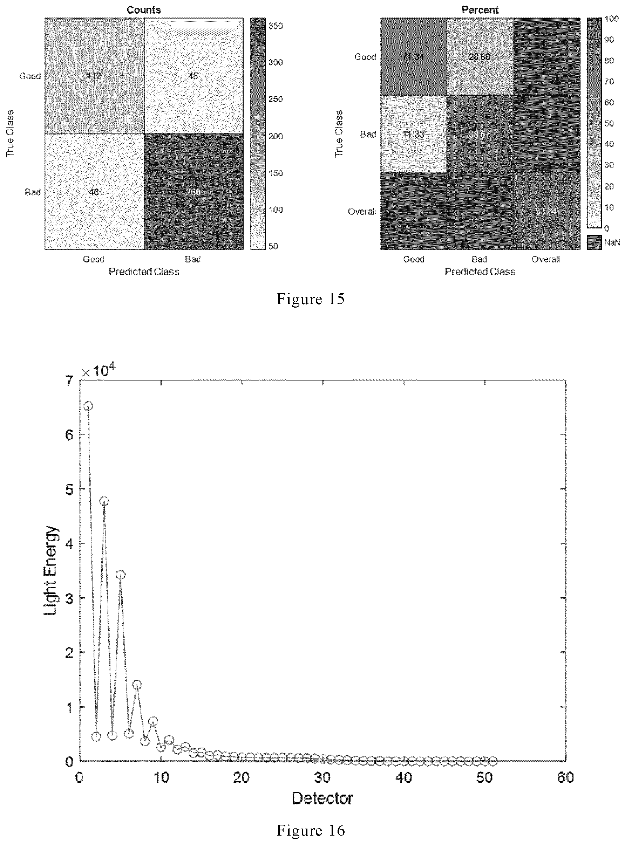

Referring to Figure 15, a confusion matrix is shown for the convolutional neural network model described in Table 2. The model was trained using the simulated data described by Equations 6 and 7. The left-hand image shows the counts, and the righthand image shows the corresponding percentages.

Overall accuracy of the model is approximately 84%. Percentage wise, good data is misclassified more often than bad (i.e. data containing a hump), which may be due to good data not being a perfectly exponential decay, as discussed previously.

A machine learning algorithm may also be used to identify spiky data. However, based on the data available during testing, the simple numerical approach described previously proved sufficient, wherein differences between elements in the background array data are analysed to determine if any large changes were present.

Referring to Figure 16, an example of background data which contains spikes is shown. The spikes, seen as alternating peaks on the low detector numbers (e.g. detectors 1 to 10), may be due to the misalignment of the focal plane detector. In this example, the spiking is on the order of $10^3$. A threshold value of, for example, 50 could be used to readily identify the spiky dataset.

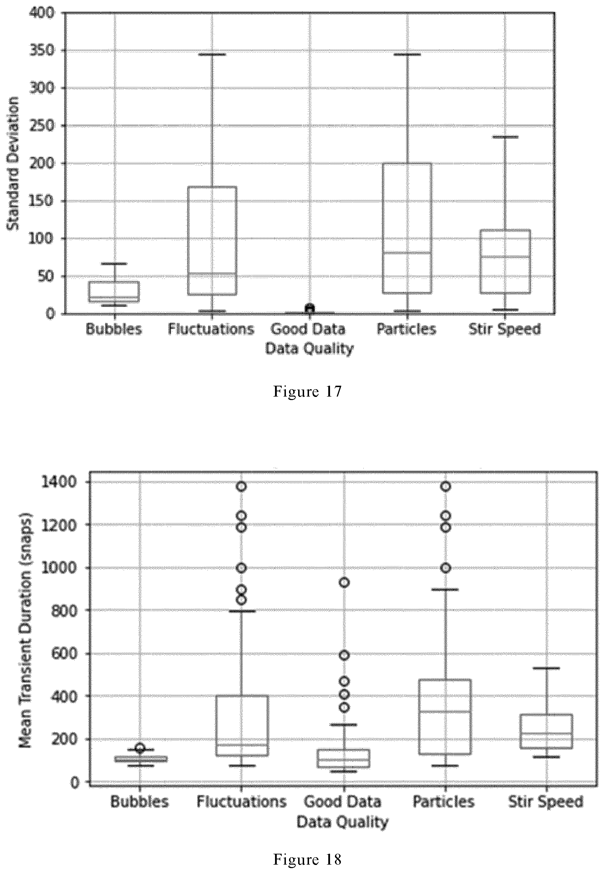

Referring to Figures 17 and 18, results are shown for classifying sources of dynamic fluctuation. Figure 17 shows results for classifying fluctuations using the standard deviation algorithm discussed previously. Figure 18 shows results for classification using the mean transient duration, which may be found by using the adaptive diffraction algorithm discussed above and calculating the duration of the identified transient event.

The effect of particles contaminating the dispersant and bubbles within the dispersant were investigated.

Table 3 shows examples of different contaminants that were used during the investigation.

Table 3: Examples of different dispersants and particle contaminants that were used during investigation into classifying sources of fluctuation.

| Dispersants | DI Water | DI Water | Ethanol, Iso-octane |
|---|---|---|---|
| Particles | Red Ink, 1um Latex, Al TE-01, Ti64, Orange Microspheres ~500um, Glass Beads 1mm | Al TE-01, Ti64, Orange Microspheres ~500um, Glass Beads 1mm | Lactose, PP and PVC microplastics |

Bubbles were created using two methods during the investigation. One which generated bubbles using carbonated liquids and surfactant (for which the correction would be degassing the dispersant), and another which generated bubbles mechanically with a stirrer speed titration (for which the correction would be to correct the stirrer speed). The liquids investigated were soda water, sparkling water, deionized water with tween surfactant and oil, using stir speeds of between 1000 and 3500 rpm. The stir speed experiments used ethanol, isopropyl alcohol and isooctane dispersants with stir speeds of between 500 and 3500 rpm.

Figure 17 shows that while standard deviation may be a good measure for detecting fluctuations (as shown in the results of Figure 10), they may not be the best metric from classifying sources of fluctuation. It appears that particle contamination shows a higher maximum standard deviation than the bubbles or stir speed experiments, but there is overlap between these groups that may make effective classification difficult. It appears that bubbles show a lower degree of fluctuation than particles, possibly due to some hydrodynamic effect that limits bubble formation.

It also appears that the duration of transient events in the bubble data is lower than other sources of fluctuation, likely due to bubbles rising quickly through the flow cell faster than the flow rate. Figure 18 shows that bubbles have a lower mean transient duration that other sources of fluctuation. A threshold may be set for classifying bubbles. If the transient duration is below the threshold, bubbles are likely the sources of fluctuation. If the transient duration is greater than the threshold and the stirrer speed is high, the system may recommend that the stirrer speed be reduced. If the transient duration is greater than the threshold and the stirrer speed is already sufficiently low, particles are likely the source.

Algorithms may be combined or used in combination to effectively identify an artefact, classify it, and alert the user to the class of ant artefacts that are present. Standard deviation may be used the identify a dynamic artefact, and the transient algorithm then used to classify this as either bubbles or dispersant contamination, for example

The example embodiments are not intended to limit the scope of the invention, which should be determined with reference to the accompanying claims.

## Claims

1. A method of automatically identifying data quality issues in background data for laser diffraction- particle characterisation, the method comprising:

   receiving background data corresponding to light intensity measured by each of a plurality of detectors in a laser-diffraction-based particle size analysis system;
   using a processor to automatically determine if the background data contains at least one artefact that is indicative of a source of error in the particle size analysis system;
   in the case that it is determined that the background data does contain at least one artefact, using the processor to provide an indication that the background data contains at least one artefact;
   classifying the at least one artefact, and reporting the classification.

2. The method of claim 1, further comprising:

   generating the background data by illuminating a sample cell comprising a control sample with a light beam from a light source so as to generate scattered light from the interaction of the light beam with the sample cell and/or control sample and detecting the scattered light with the plurality of detectors;
   wherein the control sample nominally consists entirely of a dispersant, and wherein the plurality of detectors are positioned at a plurality of different angles relative to a propagation direction of the light beam.

3. The method of claim 1 or 2, wherein automatically determining if the background data contains at least one artefact comprises applying to the background data at least one of:

a dynamic algorithm configured to identify a transient fluctuation within the background data; and
a static algorithm configured to identify a static artefact in the background data.

4. The method of claim 3, wherein the dynamic algorithm comprises at least one of:

(i) a peak detection algorithm configured to identify peaks within in the time series background data and calculate the percentage of the time series background data that contains peaks of intensity greater than a threshold value;
(ii) an adaptive diffraction algorithm configured to identify transient events with the background data and calculate a property of the transient events; and
(iii) a standard deviation algorithm wherein the maximum standard deviation in the time series background data for each detector is calculated; and
wherein the dynamic algorithm is configured to identify the time series background data as containing a dynamic fluctuation if at least one of:

a) the calculated percentage is above a threshold value,
b) the calculated property of the transient events is above a threshold value; and
c) the calculated maximum standard deviation for the time series background data is above a threshold value.

5. The method of claim 3 or 4, wherein the static algorithm comprises at least one of:

(i) a hump algorithm configured to identify a hump within the static background data; and
(ii) a spikey algorithm configured to identify excessive variance between the static background data measured between at least one pair of detectors; and
wherein the static algorithm is configured to identify the static background data as containing a static artefact if either a hump or an excessive variance between detectors is identified.

6. The method of claim 5, wherein the hump algorithm comprises
a machine learning algorithm, comprising a machine learning model that has been trained to identify a hump in the static background data.

7. The method of claim 6, wherein the machine learning model comprises a convolutional neural network with at least five convolutional layers.

8. The method of any previous claim, wherein automatically determining if the background data contains at least one artefact is performed prior to a particle analysis measurement of a particle sample, and the particle analysis measurement is halted if it is determined that background data contains artefacts.

9. The method of claim 8, wherein the particle analysis measurement comprises:
illuminating the sample with a light beam from a light source, thereby generating scattered light from the interaction of the light beam with particles of the sample; detecting raw measurement data comprising a distribution of the scattered light intensity over a range of different scattering angles; using a processor to determine a particle characteristic from the raw measurement data.

10. The method of claim 9, further comprising:

generating corrected measurement data by subtracting the background data from the raw measurement data; and
performing a negative data check, wherein the corrected measurement data is identified as faulty if the number of detectors with negative corrected measurement values or the maximum negative value across all of the corrected measurement data is above a threshold value.

11. The method of any previous claim, wherein automatically determining if the background data comprises at least one artefact is performed at least once as background data is received.

12. The method of any previous claim, further comprising automatically determining a corrective action in response to a determination of a type of artefact, and displaying to the user an indication of the corrective action.

13. A non-volatile machine readable medium comprising instructions for configuring a processor to perform a method, the method comprising: receiving background data corresponding to light intensity measured by each of a plurality of detectors in a laser-diffraction-based particle size analysis system;

using a processor to automatically determine if the background data contains at least one artefact that is indicative of a source of error in the particle size analysis system;

in the case that it is determined that the background data does contain at least one artefact, using the processor to provide an indication that the background data contains at least one artefact.

**14.** A laser diffraction instrument, comprising:

a sample cell;

a light source configured to illuminate the sample cell with a light beam, thereby generating scattered light from the interaction of the light beam with particles within the sample cell;

a plurality of light detectors configured to detect a distribution of the scattered light intensity over a range of different scattering angles;

a processor configured to determine a particle characteristic from the distribution of scattered light intensity over the range of different scattering angles;

wherein the processor is further configured to:

receive background data corresponding to light intensity measured by each of the plurality of detectors;

automatically determine if the background data contains at least one artefact that is indicative of a source of error in the particle size analysis system;

in the case that it is determined that the background data does contain at least one artefact, provide an indication that the background data contains at least one artefact.

**15.** The laser diffraction instrument of claim 14, wherein the processor is configured to perform the method of any of claims 1 to 12.

Figure 1

Figure 2

Figure 3

Figure 4

Figure 5

Figure 6

Figure 7

Figure 8

300

Figure 9

Figure 10

Figure 11

Figure 12

Figure 13

Figure 14

Figure 15

Figure 16

Figure 17

Figure 18

Europäisches
Patentamt

European
Patent Office

Office européen
des brevets

# EUROPEAN SEARCH REPORT

**Application Number**

**EP 22 18 6808**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Anonymous: "Malvern Panalytical 2017 Mastersizer 3000 Customer Training Course", <br><br> , <br> 1 January 2017 (2017-01-01), pages 1-60, XP93015960, <br> Retrieved from the Internet: <br> URL:https://www.anamet.cz/wp-content/uploads/2022/02/a_ms3000_training_1.pdf <br> [retrieved on 2023-01-20] <br> * pages 25-60 * <br> ----- | 1-15 | INV. <br> G01N15/02 |
| X | Anonymous: "Software update notification Mastersizer 3000 software v3.10: PSS0223-15", <br><br> , <br> 1 January 2013 (2013-01-01), pages 1-15, XP93015949, <br> Retrieved from the Internet: <br> URL:https://www.malvernpanalytical.com/es/Assets/Software-Update-Notification-for-Mastersizer-3000-v310-PSS0223-15_tcm61-24435.pdf <br> [retrieved on 2023-01-20] | 1,13,14 | |
| A | * References 33367 and 36469; page 5 * <br> * "File type" -> Data quality addins; page 9 * <br> * "Background Alarm Settings"- and "Pre-Alignment Delay"-sections; page 13 - page 14 * <br> ----- <br><br> -/-- | 2-12,15 | TECHNICAL FIELDS SEARCHED (IPC) <br><br> G01N |

The present search report has been drawn up for all claims

| Place of search | Date of completion of the search | Examiner |
|---|---|---|
| The Hague | 20 January 2023 | Dekker, Derk |

EPO FORM 1503 03.82 (P04C01)

## EUROPEAN SEARCH REPORT

Application Number

EP 22 18 6808

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Anonymous: "MASTERSIZER 3000", Malvern Instruments, 1 December 2016 (2016-12-01), pages 1-20, XP055493335, Retrieved from the Internet: URL:https://www.malvernpanalytical.com/en/assets/MRK1872-06-EN_MS3000_Broch_INTERACT_12-2016_tcm50-17232.pdf [retrieved on 2018-07-18] * "BUILT-IN EXPERTISE"-section; page 6 * | 1-15 | |

The present search report has been drawn up for all claims

| Place of search | Date of completion of the search | Examiner |
|---|---|---|
| The Hague | 20 January 2023 | Dekker, Derk |

TECHNICAL FIELDS SEARCHED (IPC)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018038782 A